# EUROPÄISCHE PATENTSCHRIFT

(11) **EP 1 375 958 B1**
(45) Veröffentlichungstag und Bekanntmachung des Hinweises auf die Patenterteilung: **24.01.2007**
(21) Anmeldenummer: 03010963.1
(22) Anmeldetag: 16.05.2003
(51) Int. Cl.: F16F 9/58

(54) **Anschlagring für ein Kolben-Zylinderaggregat**
Stop ring for a piston-cylinder unit
Anneau de butée pour unité piston-cylindre

(30) Priorität: 25.06.2002 DE 10228223
(43) Veröffentlichungstag der Anmeldung: 02.01.2004
(73) Patentinhaber: ZF Sachs AG, 97424 Schweinfurt (DE)
(72) Erfinder: Pradel, Robert, 97520 Röthlein (DE); Popp, Franz-Josef, 97535 Wasserlosen (DE); Helbig, Claus, 97490 Poppenhausen (DE); Rudloff, Werner, 97440 Werneck (DE); Fritz, Edgar, 97488 Stadtlauringen (DE); Noppinger, Arno, 97520 Röthlein (DE); Weigand, Erwin, 97247 Eisenheim (DE)

(56) Entgegenhaltungen:
- DE-A- 2 655 705
- DE-A- 4 332 296
- DE-U- 7 408 730
- DE-U- 7 703 395
- DE-U- 20 021 481
- US-A- 5 024 301
- US-A1- 2002 104 723
- PATENT ABSTRACTS OF JAPAN Bd. 1997, Nr. 06, 30. Juni 1997 (1997-06-30) & JP 9 042364 A (KAYABA IND CO LTD), 10. Februar 1997 (1997-02-10)

## Beschreibung

Die Erfindung betrifft ein Kolben-Zylinderaggregat gemäß dem Oberbegriff von Patentanspruch 1.

Aus der DE 77 03 395 U1 ist ein Stoßdämpfer mit einem Zuganschlag bekannt, wobei ein Stützelement formschlüssig mit der Kolbenstange verbunden ist. Die Kolbenstange verfügt über eine umlaufende Nut, in die Teile des Stützelements verformt werden. In Ausfahrrichtung der Kolbenstange stützt sich das Stützelement mit seinen verformten Volumenteilen in der umlaufenden Nut ab. Bei einer Belastung auf das Stützelement in Einfahrrichtung der Kolbenstange kann ein Absatz der Kolbenstange als Stützfläche genutzt werden. Der Absatz der Kolbenstange wirkt sich als erheblicher Materialeinsatz und damit kostentreibend aus.

Bei einer Alternativausführung wird anstelle des einteiligen Stützelements ein zusätzliches Sicherungselement verwendet, auf dem sich ein separates Stützelement mit einem Absatz zur Kammerung des Sicherungselements abstützt.

Die DE 26 55 705 B2 beschreibt einen hydraulischen Teleskopschwingungsdämpfer mit einem elastischen Zuganschlag, bei dem ein Sicherungselement ein Stützelement trägt, das in beiden axialen Richtungen das Stützelement umgreift. Dazu ist das Stützelement mit einer Bördelung versehen. Bei einem plastisch verformten Stützelement besteht der technische Widerspruch, dass der Werkstoff einerseits gut verformbar sein soll, jedoch nach der gewünschten Verformung möglichst große Kräfte übertragen muss.

Aufgabe der vorliegenden Erfindung ist es, ein Stützelement für ein Kolben-Zylinderaggregat derart weiterzuentwickeln, dass große Belastungen in zwei Richtungen abgestützt werden können.

Erfindungsgemäß wird die Aufgabe dadurch gelöst, dass das Stützelement zwei ringförmige Sicherungselemente aufweist, wobei jedes der beiden Sicherungselemente bei einer wechselnden Belastung der Kolbenstange in nur eine Richtung belastet wird.

Vorteilhafte Weiterentwicklungen sind in den Unteransprüchen beschrieben.

Anhand der folgenden Figurenbeschreibung soll die Erfindung näher erläutert werden.

Es zeigt:

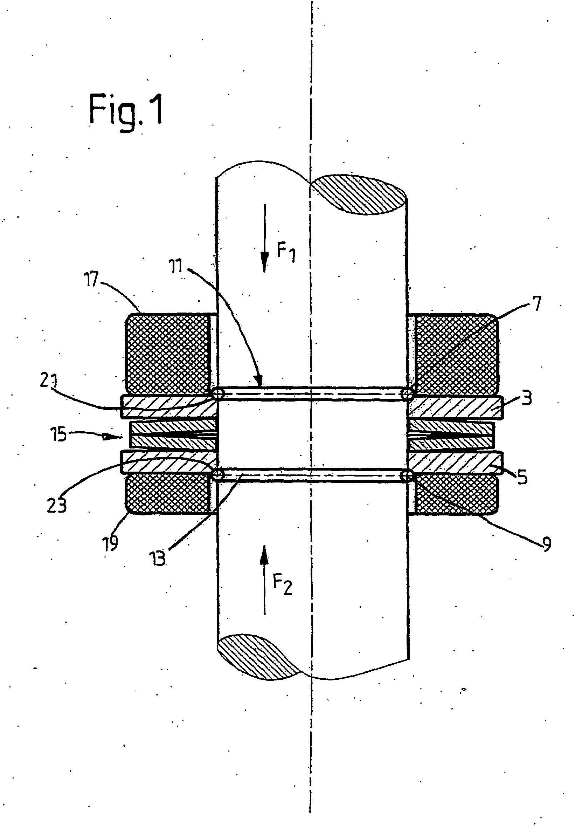

- Fig. 1 - 4: Zwei Stützelemente in Verbindung mit zwei Sicherungselementen

Die Fig. 1 beschränkt sich in ihrer Darstellung auf eine Kolbenstange 1 eines Kolben-Zylinderaggregates, insbesondere eines Schwingungsdämpfers. Die Kolbenstange trägt zwei Stützelemente 3;5, die sich an Sicherungselementen 7;9, die jeweils in eine Ringnut 11;13 der Kolbenstange eingreifen, abstützen. Unterhalb eines ersten Sicherungselements 7 ist ein erstes Stützelement 3 angeordnet. In einem Abstand zum ersten Sicherungselement 3 stützt sich ein zweites Stützelement 5 auf einem zweiten Sicherungselement 9 ab. Zwischen den beiden Stützelementen ist ein Federelement 15 angeordnet. In diesem Fall wird das Federelement von einem Tellerfederpaket gebildet, das die beiden Stützelemente gegen die Sicherungselemente vorspannt. Auf der Oberseite des ersten und der Unterseite des zweiten Stützelements ist jeweils ein Federkörper 17;19 angeordnet.

Bei einer Belastung der Kolbenstange mit dem Kraftvektor F1 wird die Kraft über den Federkörper auf das erste Stützelement übertragen, der sich ggf. geringfügig gegen die Kraft des Federelements axial verschieben kann. Der Kraftfluss setzt sich über das Federelement und das zweite Anschlagselement auf das zweite Sicherungselement fort.

Eine Belastung mit dem Kraftvektor F2 führt dazu, dass der Federkörper die Belastung auf das zweite Stützelement überträgt und die Kraft weiter über das Federelement auf das erste Stützelement in Verbindung mit dem Sicherungselement geführt wird. Folglich wird jedes der Sicherungselemente 7;9 auch bei wechselnden Belastungsrichtungen nur in eine Richtung belastet, da beide Stützelemente 7;9 als Stützfläche eine halbseitig offene Rinne 21;23 aufweisen, die sich an dem jeweiligen Sicherungselement abstützt.

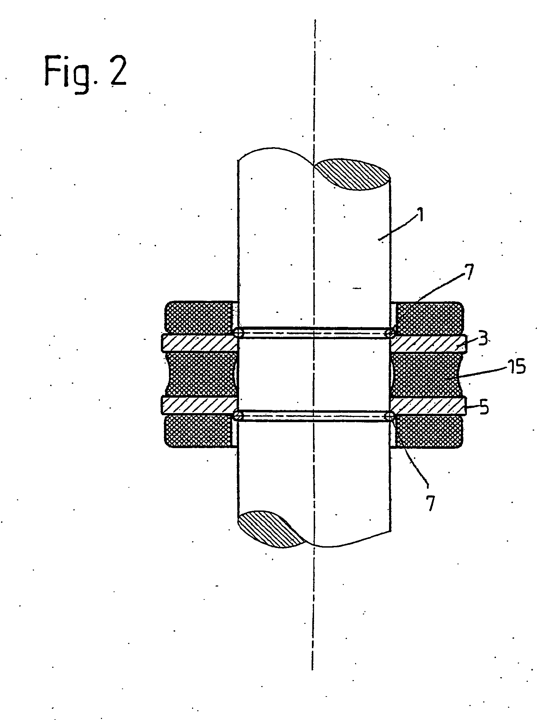

Mit der Figur. 2 soll dokumentiert werden, dass das Federelement 15 zwischen den Stützelementen 3;5 auch von einem Elastomerkörper gebildet werden kann. Bei einem Elastomerkörper ist auf jeden Fall eine Beschädigung der Kolbenstangenoberfläche ausgeschlossen.

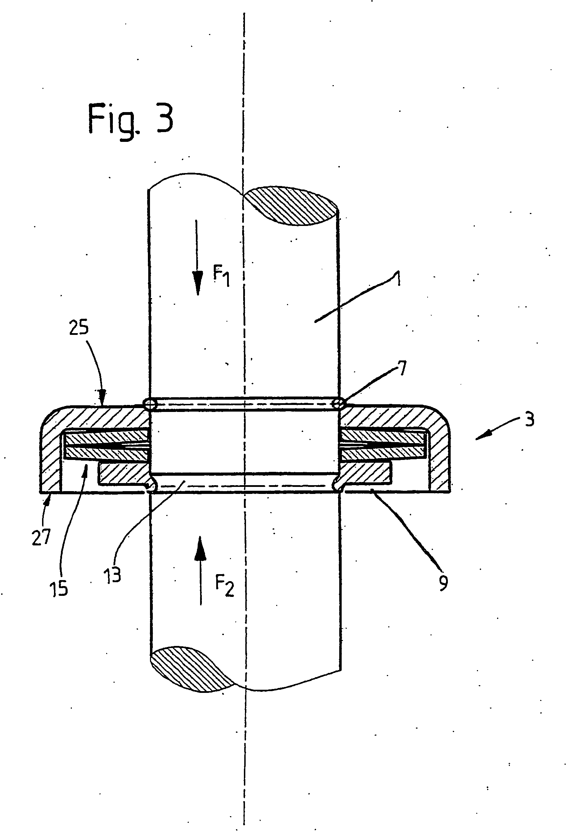

Die Figur 3 zeigt eine Abwandlung der Figur 1, indem nur ein Stützelement 3 in Verbindung mit einem ringförmigen Sicherungselement 7, das elastische aufweitbar ist, und einem Sicherungselement 9, das plastisch in eine Nut 13 der Kolbenstange 1 verformt wird, zur Anwendung kommt. Das Stützelement verfügt für die erste Belastungsrichtung mit der Kraft F1 über eine kreisringförmige Stützfläche 25 und für die Kraft aus der zweiten Belastungsrichtung über entgegengesetzt orientierte Stützflächen 27 auf einem Hülsenabschnitt, die auf einem größeren Durchmesser angeordnet sind als das zweite Sicherungselement 9. Das plastisch verformte Sicherungselement muss nur die Belastung aus der ersten Belastungsrichtung aufnehmen, so dass die Form der Ringnut in der Kolbenstange 1 entsprechend optimiert werden kann.

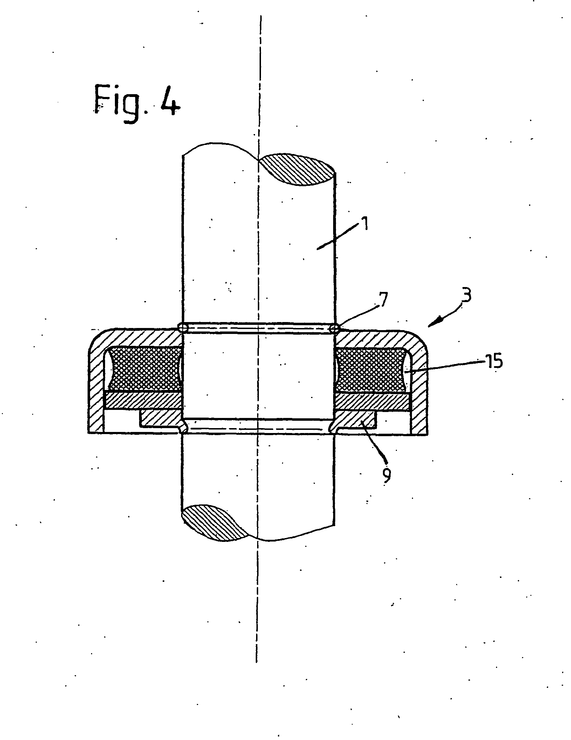

Die Fig. 4 soll wiederum nur verdeutlichen, dass anstelle eines Tellerfederpakets zwischen dem Stützelement 3 und dem zweiten Sicherungselement 9 auch ein Elastomerkörper als Federelement eingespannt sein kann, um etwaige Fertigungstoleranzen auszugleichen.

## Patentansprüche

1. Kolben-Zylinderaggregat, umfassend eine axial bewegliche Kolbenstange, an der zumindest ein Stützelement angeordnet ist, wobei zwischen dem Stützelement und der Kolbenstange eine Formschluss-Verbindung vorliegt, indem ein Sicherungselement des Stützelementes in eine Ringnut der Kolbenstange eingreift,
**dadurch gekennzeichnet,**
**dass** das Stützelement (3;5) zwei ringförmige Sicherungselemente (7;9) aufweist, wobei jedes der beiden Sicherungselemente (7;9) bei einer wechselnden Belastung der Kolbenstange in nur eine Richtung belastet wird.

2. Kolben-Zylinderaggregat nach Anspruch 1,
**dadurch gekennzeichnet,**
**dass** gegen die Belastungsrichtung des Stützelements (3;5) jeweils ein Sicherungselement (7;9) ausgeführt ist und für jedes der beiden Sicherungselemente (7;9) am Stützelement (3;5) nur eine in Belastungsrichtung verlaufende Stützfläche (21;23) vorgesehen ist.

3. Kolben-Zylinderaggregat nach Anspruch 2,
**dadurch gekennzeichnet,**
**dass** zwei Stützelemente (3;5) verwendet werden, wobei sich jeweils ein Stützelement (3;5) an einem Sicherungselement (7:9) abstützt und zwischen den beiden Stützelementen (3;5) mindestens ein Federelement (15) angeordnet ist.

4. Kolben-Zylinderaggregat nach Anspruch 3,
**dadurch gekennzeichnet,**
**dass** das Federelement (15) von mindestens einer Tellerfeder gebildet wird.

5. Kolben-Zylinderaggregat nach Anspruch 3,
**dadurch gekennzeichnet,**
**dass** das Federelement (15) von einem Elastomerkörper gebildet wird.

6. Kolben-Zylinderaggregat nach Anspruch 1,
**dadurch gekennzeichnet,**
**dass** das Stützelement (3) für eine erste Belastungsrichtung eine kreisringförmige Stützfläche (25) aufweist und auf einen größeren Durchmesser als das zweite Sicherungselement (9) für die zweite Belastungsrichtung entgegengesetzt orientierte Stützflächen (27) verfügt.

7. Kolben-Zylinderaggregat nach Anspruch 6,
**dadurch gekennzeichnet,**
**dass** die Stützflächen (17) für die zweite Belastungsrichtung von einem Hülsenabschnitt des Stützelements (3) gebildet werden.

8. Kolben-Zylinderaggregat nach Anspruch 1,
**dadurch gekennzeichnet,**
**dass** das zweite Sicherungselement (9) plastisch in eine Nut (11) der Kolbenstange (1) verformt ist, wobei das zweite Sicherungselement nur Belastungen aus der ersten Belastungsrichtung aufnimmt.

## Claims

1. Piston/cylinder unit, comprising an axially movable piston rod, on which at least one support element is arranged, a form-fitting connection being provided between the support element and the piston rod through engagement of a securing element of the support element in an annular groove in the piston rod,
**characterized in that**
the support element (3; 5) comprises two annular securing elements (7; 9), wherein each of the two securing elements (7; 9) is loaded in just one direction in the event of alternating loading of the piston rod.

2. Piston/cylinder unit according to Claim 1,
**characterized in that**
in each case one securing element (7; 9) is configured towards the loading direction of the support element (3; 5) and for each of the two securing elements (7; 9) only one support face (21; 23) extending in the loading direction is provided on the support element (3; 5).

3. Piston/cylinder unit according to Claim 2,
**characterized in that**
two support elements (3; 5) are used, wherein in each case one support element (3; 5) is supported on one securing element (7; 9) and at least one spring element (15) is arranged between the two support elements (3; 5).

4. Piston/cylinder unit according to Claim 3,
**characterized in that**
the spring element (15) takes the form of at least one Belleville spring washer.

5. Piston/cylinder unit according to Claim 3,
**characterized in that**
the spring element (15) takes the form of an elastomeric member.

6. Piston/cylinder unit according to Claim 1,
**characterized in that**
the support element (3) comprises a circular ringshaped support face (25) for a first loading direction and has opposingly oriented support faces (27) for the second loading direction on a larger diameter than the second securing element (9).

7. Piston/cylinder unit according to Claim 6,
**characterized in that**
the support faces (17) for the second loading direction take the form of a sleeve portion of the support element (3).

8. Piston/cylinder unit according to Claim 1,
**characterized in that**
the second securing element (9) is deformed plastically into a groove (11) in the piston rod (1), wherein the second securing element only absorbs loads from the first loading direction.

## Revendications

1. Unité cylindre-piston, comprenant une tige de piston déplaçable axialement, sur laquelle est disposé au moins un élément de support, une connexion par engagement positif étant réalisée entre l'élément de support et la tige de piston, en ce qu'un élément de fixation de l'élément de support vient en prise dans une rainure annulaire de la tige de piston,
**caractérisée en ce que**
l'élément de support (3 ; 5) présente deux éléments de fixation (7 ; 9), chacun des deux éléments de fixation (7 ; 9) n'étant sollicité que dans une seule direction dans le cas d'une sollicitation alternative de la tige de piston.

2. Unité cylindre-piston selon la revendication 1,
**caractérisée en ce**
**qu'**un élément de fixation (7 ; 9) respectif est réalisé à l'encontre de la direction de sollicitation de l'élément de support (3 ; 5) et en ce que pour chacun des deux éléments de fixation (7 ; 9) sur l'élément de support (3 ; 5), seulement une surface de support (21 ; 23) s'étendant dans la direction de sollicitation est prévue.

3. Unité cylindre-piston selon la revendication 2,
**caractérisée en ce que**
deux éléments de support (3 ; 5) sont utilisés, un élément de support (3 ; 5) s'appuyant à chaque fois sur un élément de fixation (7 ; 9) et au moins un élément de ressort (15) étant disposé entre les deux éléments de support (3 ; 5).

4. Unité cylindre-piston selon la revendication 3,
**caractérisée en ce que**
l'élément de ressort (15) est formé par au moins un ressort Belleville.

5. Unité cylindre-piston selon la revendication 3,
**caractérisée en ce que**
l'élément de ressort (15) est formé par un corps en élastomère.

6. Unité cylindre-piston selon la revendication 1,
**caractérisée en ce que**
l'élément de support (3) présente pour une première direction de sollicitation une surface de support (25) de forme annulaire circulaire, et dispose d'un plus grand diamètre que le deuxième élément de fixation (9) pour les surfaces de support (27) orientées à l'opposé de la deuxième direction de sollicitation.

7. Unité cylindre-piston selon la revendication 6,
**caractérisée en ce que**
les surfaces de support (17) pour la deuxième direction de sollicitation sont formées par une portion de douille de l'élément de support (3).

8. Unité cylindre-piston selon la revendication 1,
**caractérisée en ce que**
le deuxième élément de fixation (9) est déformé plastiquement dans une rainure (11) de la tige de piston (1), le deuxième élément de fixation ne recevant que les sollicitations provenant de la première direction de sollicitation.
